# FASCICULE DE BREVET EUROPEEN

(11) **EP 3 661 810 B1**
(45) Date de publication et mention de la délivrance du brevet: **14.04.2021**
(21) Numéro de dépôt: 18752816.1
(22) Date de dépôt: 09.07.2018
(51) Int. Cl.: B60R 16/02, H02G 3/04

(54) **GOULOTTE DE FAISCEAU PLANCHE DE BORD AVEC CASQUETTE ANTI RUISSELLEMENT**
INSTRUMENTENTAFELDRAHTBÜNDELKANAL MIT RIESELSCHUTZKAPPE
DASHBOARD WIRE BUNDLE CHANNEL WITH ANTI-TRICKLE CAP

(30) Priorité: 01.08.2017 FR 1757379
(43) Date de publication de la demande: 10.06.2020
(73) Titulaire: PSA Automobiles SA, 78300 Poissy (FR)
(72) Inventeur: AMIAUT, Herve, 92500 RUEIL MALMAISON (FR); MITOUART, Jean Guy, 77310 PRINGY (FR)
(86) Numéro de dépôt international: PCT/FR2018/051717
(87) Numéro de publication internationale: WO 2019/025680

(56) Documents cités:
- JP-A- 2009 065 798
- JP-A- 2011 030 357
- JP-U- S4 822 792
- US-A1- 2005 045 361
- US-B1- 6 268 566

## Description

La présente invention concerne de manière générale une goulotte de faisceau avec des moyens de protection contre le ruissellement, montée dans une planche de bord d'un véhicule automobile. Le document US2005045361 A décrit une goulotte selon le préambule de la revendication 1.

Il est connu dans l'art antérieur des systèmes de protection contre le ruissellement d'eau dans la planche de bord. Le document JP2004090705 décrit un système de conduit pour la climatisation de véhicule, situé dans la planche de bord, utilisant des gouttières disposées directement en dessous d'un conduit de ventilation afin d'évacuer l'eau formée par condensation à l'intérieur de la planche de bord et protéger ainsi les composants situés en dessous.

En contrepartie, ce système présente notamment l'inconvénient d'être encombrant et donc ne pas permettre le passage dans un endroit exigu. De plus, il ne permet pas une évacuation rapide de l'eau de condensation.

Un but de la présente invention est de répondre aux inconvénients du document de l'art antérieur mentionné ci-dessus et en particulier, tout d'abord, de proposer une goulotte de faisceau adaptée pour être montée dans une planche de bord de véhicule automobile, et de permettre le passage du faisceau dans un endroit exigu et encombré d'autres composants, notamment de composants électriques, et de permettre une évacuation rapide de l'eau de condensation.

Pour cela, un premier aspect de l'invention concerne une goulotte de faisceau de véhicule automobile selon la revendication 1.

Ceci permet de proposer une goulotte de faisceau avec un encombrement réduit, adapté pour passer à travers un endroit exigu de la planche de bord et permettre le passage de faisceau en contournant les éléments disposés dans l'environnement de la planche de bord, où de nombreux équipements, notamment électriques, sont présents. Ainsi, l'arrangement dans lequel les brins d'élément de conducteurs sont installés et montés dans une pluralité de chemins coplanaires permet d'avoir une faible épaisseur de la goulotte et autorise ainsi de supporter et guider les brins à travers une ouverture ou un espace traversant en forme de fente.

En d'autres termes, les chemins de la pluralité de chemins de brin d'élément de conducteur sont positionnés côte à côte les uns des autres, dans un même plan, de sorte à réduire l'encombrement dans une direction perpendiculaire à ce plan commun, et ainsi réduire l'épaisseur de la goulotte au niveau de la deuxième portion. L'épaisseur est ainsi réduite à l'épaisseur nécessaire au supportage d'un seul brin, et notamment en comparaison à une tresse ou un toron de brins par exemple, dans lequel l'épaisseur est plus grande, et correspond à plusieurs brins.

On entend par chemin un endroit ou une surface ou paroi d'appui recevant ou supportant au moins un brin d'élément de conducteur. Il s'agit ainsi de maintenir en place le brin d'élément de conducteur, ou de le fixer afin d'assurer son guidage. On entend par élément de conducteur un câble ou une tuyauterie par exemple, de forme sensiblement longitudinale et allongée, généralement cylindrique et souple. La première portion est de préférence accolée à la deuxième portion, mise bout à bout afin de permettre le guidage des brins.

Avantageusement,
- le premier chemin de brins d'élément de conducteur comprend au moins une portion d'attache agencée pour maintenir la pluralité de brins, et
- la pluralité de chemins de brin d'élément de conducteur comprend une pluralité de portions d'attache agencées pour chacune maintenir au moins un brin de la pluralité de brins.

Ceci permet de proposer une goulotte avec des moyens de fixation et de maintien de sorte à assurer un guidage et un supportage du faisceau. L'attache ou portion d'attache peut être réalisée au moyen d'un clip, d'un serre-câble, ou d'une pièce de maintien agencée pour être perpendiculaire au brin ou aux brins par exemple.

Avantageusement, la pluralité de chemins de brin d'élément de conducteur forme une nappe.

Ceci permet de proposer une goulotte avec une taille réduite en épaisseur pour la deuxième portion comprenant la nappe. La forme de nappe est ainsi adaptée pour passer à travers un espace libre en forme de fente par exemple.

Selon l'invention, la goulotte comprend en outre une casquette anti-ruissellement agencée dans le prolongement de la deuxième portion.

Ceci permet de proposer une goulotte avec des moyens de protection, comme une casquette qui peut être formée d'une plaque réalisée dans la même matière que la goulotte, en matière plastique. La casquette est agencée pour protéger de l'eau de ruissellement une partie positionnée plus bas lorsque la goulotte est installée dans la planche de bord à la manière d'un auvent. Ceci permet d'améliorer la sécurité et la durée de vie des composants environnants, et en particulier des composants électriques sensibles à l'eau.

Avantageusement, la goulotte comprend en outre une troisième portion comprenant une pluralité de chemins de brin d'élément de conducteur divergents, agencée pour recevoir la pluralité de brins d'élément de conducteur.

Avantageusement, la goulotte comprend en outre une troisième portion comprenant une pluralité de chemins de brin d'élément de conducteur divergents, chaque chemin de brin d'élément de conducteur étant agencé pour recevoir un brin de la pluralité de brins d'élément de conducteur.

Avantageusement, la goulotte comprend en outre une troisième portion comprenant une pluralité de chemins de brin d'élément de conducteur coplanaires et divergents, chaque chemin de brin d'élément de conducteur étant agencé pour recevoir un brin de la pluralité de brins d'élément de conducteur.

Ceci permet de proposer une goulotte adaptée à l'environnement encombré et exigu de la planche de bord, et de permettre un raccordement aisé des brins d'élément de conducteur au niveau de la troisième portion.

Avantageusement, la goulotte comprend en outre au moins une patte de fixation agencée pour fixer la goulotte à une planche de bord du véhicule automobile.

Ceci permet de proposer une goulotte avec des moyens de fixation, afin de rendre fixe la goulotte par rapport à la planche de bord du véhicule automobile.

Avantageusement, la goulotte est réalisée en matière plastique.

Ceci permet de proposer une goulotte dans une matière légère et facilement mettable en forme, bien adaptée au guidage d'élément de conducteur et résistante à l'eau de condensation.

Avantageusement, la goulotte est réalisée en un matériau flexible.

Ceci permet de proposer une goulotte permettant de passer dans des passages tortueux de la planche de bord, dans lesquels les formes de fentes peuvent présenter une grande profondeur ou une forme complexe.

Un second aspect de la présente invention concerne un véhicule automobile comprenant :
- une planche de bord comprenant une portion concave,
- un espace en forme de fente traversant la portion concave, et
- une goulotte selon le premier aspect de la présente invention, dans lequel la deuxième portion de goulotte est agencée dans l'espace en forme de fente.

Ceci permet de proposer un véhicule avec une goulotte permettant de guider et supporter les brins d'élément de conducteur à travers l'encombrement exigu de la planche de bord.

Avantageusement, le véhicule automobile comprend en outre :
- au moins un élément électrique de planche de bord, tel qu'un boitier de servitude intelligent,
- une traverse de planche de bord,
   dans lequel la goulotte comprend en outre une casquette anti-ruissellement agencée dans le prolongement de la deuxième portion et agencée entre la traverse de planche de bord et l'élément électrique.

Ceci permet de proposer un moyen d'évacuation rapide de l'eau de condensation pour l'éloigner de l'élément électrique agencé sous la traverse. Ceci est particulièrement avantageux pour un élément électrique positionné dans le cône de ruissellement de la traverse de planche de bord.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une goulotte de faisceau selon la présente invention, en vue de dessous,
- la figure 2 représente la goulotte de faisceau selon la présente invention, en vue de dessus,
- la figure 3 représente la goulotte de faisceau selon la présente invention, vue dans l'environnement d'une planche de bord de véhicule automobile.

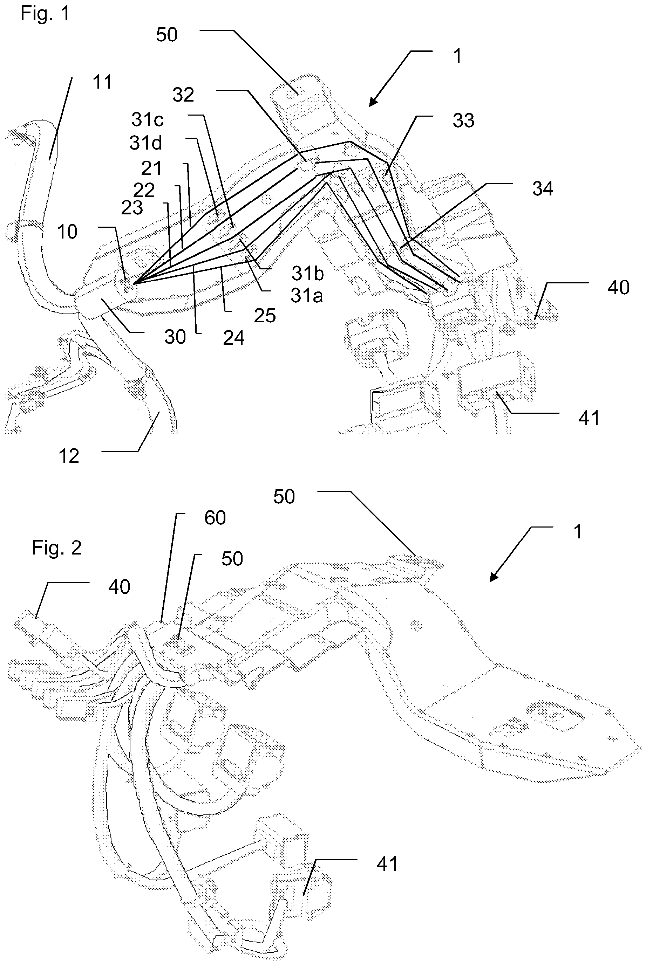

La figure 1 représente une goulotte de faisceau selon la présente invention.

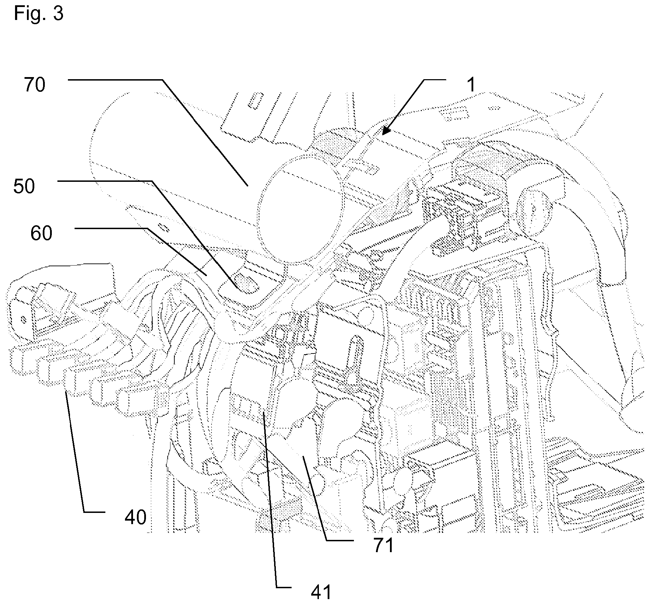

La goulotte 1 de faisceau est destinée à être montée sous une planche de bord de véhicule automobile, dans une portion concave de la planche de bord. Le véhicule automobile comprend au moins un faisceau 10 qui comprend une pluralité de brins d'éléments de conducteur tel que des câbles électriques ou de tuyauteries, généralement souples, la planche de bord et divers éléments ou composants électriques logés sous la planche de bord, comme un boîtier de servitude intelligent 71, représenté en figure 3 dans son environnement.

Dans l'exemple illustré en figure 1, le faisceau de câbles 10 comprend une pluralité de brins de câbles électriques. Il est composé des avant-brins 11, 12 constitués de brins, et situés en amont de la goulotte 1. Les directions amont et aval sont choisies arbitrairement ici, à des fins de clarté. La goulotte 1 comprend une première portion comprenant un premier chemin de brins d'élément de conducteur ou premier chemin de câbles agencé pour recevoir la pluralité de brins de câbles et comprenant une portion d'attache ou attache 30 agencée pour maintenir la pluralité de brins. La portion d'attache 30 maintien tous les brins ensemble, de sorte que la forme en coupe soit sensiblement circulaire comme dans l'exemple illustré.

Le faisceau de câbles 10 comprend cinq brins, 21, 22, 23, 24, 25 formant la pluralité de brins, qui s'étendent depuis la portion d'attache 30 qui relient les brins entre eux et les maintien à la goulotte 1, vers une direction aval. La portion d'attache 30 peut être réalisée à l'aide d'un serre-câble ou un lien par exemple. La goulotte 1 comprend une pluralité de chemins de brins d'élément de conducteur ou pluralité de chemins de câbles coplanaires, chaque chemin étant agencé pour recevoir un brin 21, 22, 23, 24, 25. Ainsi, les brins 21, 22, 23, 24, 25 sont tous situés dans le même plan, de sorte à former une partie plane. Les brins 21, 22, 23, 24, 25 sont ainsi juxtaposés ou posés immédiatement côtes-à-côtes ou avec un faible espacement eu égard à l'arrangement.

En d'autres termes, les brins 21, 22, 23, 24, 25 sont étalés de sorte à former une nappe, et ainsi réduire l'épaisseur de la zone où sont installés les brins 21, 22, 23, 24, 25. En coupe, l'épaisseur utilisée par les brins 21, 22, 23, 24, 25 est donc réduite lorsqu'ils sont divisés un à un et répartis dans un sens transverse de la goulotte 1, plutôt que lorsqu'ils sont regroupés afin de former une tresse, regroupés par la portion d'attache ou attache 30.

La pluralité de chemins de brin d'élément de conducteur comprend une pluralité de portions d'attache 31a, 31b, 31c, 31d, comprenant cinq attaches 31a, 31b, 31c, 31d, agencée pour chacune maintenir un brin de la pluralité de brins 21, 22, 23, 24, 25. Le parcours des brins 21, 22, 23, 24, 25 est schématiquement représenté sur la figure 1.

Les brins 21, 22, 23, 24, 25 s'étendent depuis la pluralité de portions d'attache 31a, 31b, 31c, 31d vers une pluralité de portions d'attache 32. Dans l'exemple illustré en figure 1, les cinq brins 21, 22, 23, 24, 25 sont entre autre maintenus par trois crochets 32, par quatre éléments d'espacement 33 et par trois clips 34.

La goulotte 1 comprend une troisième portion comprenant une pluralité de chemins de brin d'élément de conducteur divergents, agencé pour recevoir les brins 21, 22, 23, 24, 25. Les brins 21, 22, 23, 24, 25 comprennent à leur extrémité, côté aval, des éléments de connectique comme des connecteurs 40, 41.

La goulotte 1 comprend en outre deux pattes de fixation 50 afin de permettre la fixation de la goulotte 1 sur la planche de bord de véhicule.

La figure 2 représente la goulotte selon la présente invention, en vue de dessous.

La goulotte 1 permet ainsi de fixer et de protéger les brins 21, 22, 23, 24, 25. En effet, outre la première portion et la deuxième portion protégées par la paroi de la goulotte 1 faite en matière plastique, la goulotte 1 comprend en outre une casquette anti-ruissellement 60 agencée dans le prolongement de la deuxième portion. La casquette 60 permet de protéger les brins 21, 22, 23, 24, 25 de la troisième portion et de protéger également les éléments électriques de la planche de bord représentés en figure 3.

La figure 3 représente la goulotte de faisceau selon la présente invention, vue dans l'environnement de la planche de bord de véhicule automobile.

La planche de bord comprend une portion concave qui est orientée vers le bas du véhicule automobile lors de son assemblage final.

La planche de bord comprend une traverse de planche de bord 70 qui sert de pièce de structure à la planche de bord. La traverse de planche de bord est agencée de sorte à permettre la fixation de la goulotte 1 par l'intermédiaire de la patte de fixation 50 de la goulotte 1, et de rendre fixe la goulotte 1.

La planche de bord comprend en outre les éléments électriques de planche de bord, comme le boîtier de servitude intelligent 71, reliés aux brins 21, 22, 23, 24, 25 par l'intermédiaire des éléments de connectique ou connecteurs 40, 41.

La casquette 60 de la goulotte 1 permet ainsi de protéger le boitier de servitude intelligent 71 de l'eau de condensation tombant de la traverse de planche de bord 70, ainsi que les éléments électriques présents dans le cône d'écoulement d'eau. La casquette 60 est ainsi agencée entre la traverse de planche de bord 70 et le boitier de servitude intelligent, et forme ainsi un obstacle.

La portion plane ou deuxième portion de la goulotte 1 est ainsi agencée dans un espace libre de la planche de bord, en forme de fente, permettant de supporter les brins 21, 22, 23, 24, 25 et de les guider.

On comprendra que diverses modifications et/ou améliorations évidentes pour l'homme du métier peuvent être apportées aux différents modes de réalisation de l'invention décrits dans la présente description. En particulier, il est fait référence à la possibilité de réaliser la goulotte dans une autre matière ou de la positionner à un autre endroit dans la planche de bord.

## Revendications

1. Goulotte (1) de faisceau de véhicule automobile,
le véhicule comprenant au moins un faisceau comprenant une pluralité de brins d'élément de conducteur (10),
la goulotte (1) comprenant une première portion comprenant un premier chemin de brins d'élément de conducteur agencé pour recevoir la pluralité de brins (10), et une deuxième portion comprenant une pluralité de chemins de brin d'élément de conducteur coplanaires, chaque chemin étant agencé pour recevoir au moins un brin de la pluralité de brins (21, 22, 23, 24, 25), **caractérisée en ce que** la goulotte comprend en outre une casquette anti-ruissellement (60) agencée dans le prolongement de la deuxième portion.

2. Goulotte (1) selon la revendication précédente, dans laquelle :
- le premier chemin de brins d'élément de conducteur comprend au moins une portion d'attache (30) agencée pour maintenir la pluralité de brins (10), et
- la pluralité de chemins de brin d'élément de conducteur comprend une pluralité de portions d'attache (31a, 31b, 31c, 31d) agencées pour chacune maintenir au moins un brin de la pluralité de brins (21, 22, 23, 24, 25).

3. Goulotte (1) selon l'une quelconque des revendications précédentes, dans laquelle la pluralité de chemins de brin d'élément de conducteur forme une nappe.

4. Goulotte (1) selon l'une quelconque des revendications précédentes, comprenant en outre une troisième portion comprenant une pluralité de chemins de brin d'élément de conducteur divergents, chaque chemin de brin d'élément de conducteur étant agencé pour recevoir un brin de la pluralité de brins d'élément de conducteur (21, 22, 23, 24, 25).

5. Goulotte (1) selon l'une quelconque des revendications précédentes, comprenant en outre au moins une patte de fixation (50) agencée pour fixer la goulotte (1) à une planche de bord du véhicule automobile.

6. Goulotte (1) selon l'une quelconque des revendications précédentes réalisée en matière plastique.

7. Goulotte (1) selon l'une quelconque des revendications précédentes réalisée en un matériau flexible.

8. Véhicule automobile comprenant :
- une planche de bord comprenant une portion concave,
- un espace en forme de fente traversant la portion concave, et
- une goulotte (1) selon l'une quelconque des revendications précédentes, dans lequel la deuxième portion de goulotte est agencée dans l'espace en forme de fente.

9. Véhicule automobile selon la revendication précédente, comprenant en outre :
- au moins un élément électrique (71) de planche de bord, tel qu'un boitier de servitude intelligent (71),
- une traverse de planche de bord (70),
dans lequel la goulotte (1) comprend en outre une casquette anti-ruissellement (60) agencée dans le prolongement de la deuxième portion et agencée entre la traverse de planche de bord (70) et l'élément électrique (71).

## Patentansprüche

1. Fahrzeugleuchte (1),
Fahrzeug mit mindestens einem Bündel mit einer Vielzahl von Leiterelementsträngen (10),
Die Rinne (1) umfasst einen ersten Abschnitt, der einen ersten Leiterelementstrang umfasst, der so angeordnet ist, dass er die Vielzahl von Strängen (10) aufnimmt, und einen zweiten Abschnitt, der eine Vielzahl von koplanaren Leiterelementsträngen umfasst, wobei jeder Pfad so angeordnet ist, dass er mindestens einen der Vielzahl von Strängen (21, 22, 24, 25) aufnimmt, **dadurch gekennzeichnet, dass** die Fig. Die Kabelrinne umfasst ferner eine in der Verlängerung des zweiten Abschnitts angeordnete Antischwemmkappe (60).

2. Rinne (1) nach dem vorhergehenden Anspruch, wobei:
- der erste Leiterelementstrang mindestens einen Befestigungsabschnitt (30) aufweist, der so angeordnet ist, dass er die Vielzahl von Strängen (10) hält, und
- die Mehrzahl von Leiterelementsträngen umfasst eine Mehrzahl von Befestigungsabschnitten (31a, 31b, 31c, 31d), die jeweils mindestens einen der Mehrzahl von Strängen (21, 22, 23, 24, 25) halten.

3. Rinne (1) nach einem der vorhergehenden Ansprüche, wobei die Vielzahl von Leiterelementsträngen eine Bahn bildet.

4. Rinne (1) nach einem der vorhergehenden Ansprüche, ferner mit einem dritten Abschnitt, der eine Mehrzahl von divergierenden Leiterelement leiterleiterbahnen umfasst, wobei jeder Leiterelement leiterbahnpfad zur Aufnahme eines Leiterelement stranges (21, 222, 2, 22, 2, 23, 23, 23, 23, 23, 24, 24, 25) ausgebildet ist.

5. Rinne (1) nach einem der vorhergehenden Ansprüche, die ferner mindestens eine Befestigungslasche (50) aufweist, die so angeordnet ist, dass sie die Rinne (1) an einem Armaturenbrett des Kraftfahrzeugs befestigt.

6. Rinne (1) nach einem der vorhergehenden Ansprüche, die aus Kunststoff besteht.

7. Rinne (1) nach einem der vorhergehenden Ansprüche, die aus einem flexiblen Material hergestellt ist.

8. Kraftfahrzeug mit :
- ein Armaturenbrett mit einem konkaven Teil,
- einem schlitzförmigen Raum, der den konkaven Teil durchquert, und
- eine Rinne (1) nach einem der vorhergehenden Ansprüche,
in dem der zweite Rinnenabschnitt in dem schlitzförmigen Raum angeordnet ist.

9. Kraftfahrzeug nach dem vorhergehenden Anspruch, das ferner umfasst:
- mindestens ein elektrisches Armaturenbrett-Element (71), wie ein Smart-Servo-Gehäuse (71),
- einem Armaturenbrett (70),
Bei dem die Rinne (1) ferner eine Anti-Abflusskappe (60) aufweist, die in der Verlängerung des zweiten Abschnitts angeordnet ist und zwischen dem Armaturenbrettträger (70) und dem elektrischen Element (71) angeordnet ist.

## Claims

1. Car harness (1) hooves,
the vehicle comprising at least one beam comprising a plurality of driver element strands (10),
the pin (1) consisting of a first portion consisting of a first path of driver element strands arranged to accommodate the plurality of strands (10) and a second portion consisting of a plurality of coplanar driver element strand paths, each path being arranged to accommodate at least one strand of the plurality of strands (21, 22, 23, 24, 25), **characterized by** the base also includes an anti-runoff cap (60) arranged in the extension of the second portion.

2. Goulotte (1) according to the previous claim, in which:
- the first path of driver element strands includes at least one attachment portion (30) arranged to maintain the plurality of strands (10), and
- the multiple strand paths of the driver element includes a plurality of attachment portions (31a, 31b, 31c, 31d) arranged to each maintain at least one strand of the plurality of strands (21, 22, 23, 24, 25).

3. Goulotte (1) according to any of the preceding claims, in which the multiple strand paths of the driver element form a tablecloth.

4. Goulotte (1) in accordance with any of the preceding claims, including a third portion comprising a plurality of divergent rider element strand paths, each rider element strand path being arranged to receive a strand of the multiple rider element strands (21, 22, 23, 24, 25).

5. Goulotte (1) in accordance with any of the preceding claims, including at least one attachment leg (50) arranged to secure the pin (1) to a dashboard of the motor vehicle.

6. Goulotte (1) according to any of the previous demands made of plastic.

7. Goulotte (1) according to any of the previous claims made of flexible material.

8. Motor vehicle comprising:
- a dashboard with a concave portion,
- a space in the shape of a slit through the concave portion, and
- a gully (1) according to any of the previous claims,
in which the second portion of the pin is arranged in the slit-shaped space.

9. Motor vehicle according to the previous claim, including:
- at least one electrical element (71) of the dashboard, such as an intelligent servitude case (71),
- a dashboard cross (70),
in which the pin (1) also includes an anti-runoff cap (60) arranged in the extension of the second portion and arranged between the dashboard cross (70) and the electrical element (71).
